# EUROPÄISCHE PATENTSCHRIFT

(11) **EP 2 446 182 B1**
(45) Veröffentlichungstag und Bekanntmachung des Hinweises auf die Patenterteilung: **30.09.2015**
(21) Anmeldenummer: 09777589.4
(22) Anmeldetag: 31.07.2009
(51) Int. Cl.: F16L 37/48

(54) **ADAPTER-KUPPLUNG**
ADAPTER COUPLING
RACCORD ADAPTATEUR

(30) Priorität: 31.03.2009 DE 102009015108
(43) Veröffentlichungstag der Anmeldung: 02.05.2012
(73) Patentinhaber: SK Anlagen- und Immobilienverwaltung GmbH, 87757 Kirchheim (DE)
(72) Erfinder: FREISEISEN, Christian, 82358 Geretsried (DE); FREISEISEN, Thomas, 82549 Königsdorf (DE)
(74) Vertreter: Köster, Hajo
(86) Internationale Anmeldenummer: PCT/EP2009/005577
(87) Internationale Veröffentlichungsnummer: WO 2010/112053

(56) Entgegenhaltungen:
- WO-A1-2005/047754
- DE-A1-102005 020 111

## Beschreibung

Die Erfindung betrifft eine Adapterkupplung zum lösbaren Aufschieben auf das wasserabgebende Ende eines Wasserauslaufes, insbesondere eines Wasserhahnes, unter Herstellung einer wasserdichten Verbindung mit einer in etwa haubenförmigen oder glockenförmigen Muffe, die in ihrem Muffeninnenraum das wasserabgebende Ende aufnehmen kann und mit einem Wasserauslass versehen ist, mit einer eine zentrale Öffnung aufweisenden elastischen Dichtung, durch deren zentrale Öffnung das wasserabgebende Ende des Wasserauslaufes in den Muffeninnenraum eingeführt werden kann, die durch das eingeführte Ende des Wasserauslaufes aufgeweitet werden und sich an die Außenmantelflache des wasserabgebendes Endes dichtend anlegen kann, die den Muffeninnenraum nach außen fluiddicht abdichtet und die auf der axial außen gelegenen Seite mehrere nach radial innen offene Taschen besitzt, und mit einer Stützeinheit, die einen aufweitbaren Trichter bildet, die axial außen von der Dichtung angeordnet ist sowie diese Dichtung stützt und die eine erste, axial äußere Ringscheibenverstärkung und eine zweiten, axial innere Ringscheibenverstärkung aufweist, welche jeweils einen äußeren, umlaufenden und durchgehenden Ringbereich besitzen, von dem sich mehrere, gleichmäßig auf dem Umfang verteilte, an ihrer Basis an dem Ringbereich beweglich angelenkte, voneinander beabstandete Zungen nach radial innen sowie schräg zur Längsachse erstrecken, wobei die Zungen der ersten Ringscheibenverstärkung und auch die Zungen der zweiten Ringscheibenverstärkung zwischen sich einen Freiraum definieren und die Zungen der zweiten Ringscheiben-verstärkung in etwa in den Freiräumen der ersten Ringscheiben-verstärkung zu liegen kommen, während die Zungen der ersten Ringscheibenverstärkung in etwa in den Freiräumen der zweiten Ringscheibenverstärkung zu liegen kommen.

Zur Herstellung einer Verbindung zwischen einem Wasserhahn und einem Schlauch ist es bekannt, den Wasserhahn mit einem Ansatzstück auszustatten, welches ein normiertes Gewinde besitzt, das auf das ebenfalls normierte Gewinde des wasserabgebenden Endes des Wasserauslaufes von Wasserhähnen aufschraubbar ist. Auf dieses Ansatzstück, welches eine Art Spitzende darstellt, kann eine mit dem Schlauch verbundene Muffe unter Herstellung einer druckdichten und fluiddichten Verbindung aufgeschoben werden. Um eine derartige Verbindung herzustellen, muss jedoch der Wasserhahn mit dem speziellen gestalteten Ansatzstück ausgestattet werden.

Um nun einen beliebig gestalteten Wasserhahn, der somit nicht mit einem speziellen Ansatzstück versehen ist, mit einem Schlauch zu verbinden, lehrt die US-A 3 515 413 eine Kupplung, die mit einer Muffe ausgestattet ist, die eine wasserhahnseitige Dichtung bzw. Abdichtmanschette besitzt, welche sich von einem ringförmigen Grundkörper in Einstiegrichtung des Wasserauslaufes des Wasserhahnes erstreckt und die zudem zur Mitte hin geneigt ist. Diese bekannte Kupplung kann auf ein Wasserrohr aufgeschoben werden, das dabei die Abdichtmanschette aufweitet. Ähnliche Vorrichtungen sind beschrieben in den US-A 3 844 586, US-A 5 743 570, US-A 2 688 499 und USA 2 094 889 sowie dem DE-GM 1 826 455. Diesen Kupplungen ist gemeinsam, dass sie nicht in der Lage sind, sich an den Wasserauslauf eines Wasserhahnes abdichtend anzulegen und/oder den herrschenden Wasserdrucken nicht standhalten.

Eine weitere derartige Kupplung bzw. Adapter-Kupplung, die sich auf viele Wasserhähne aufschieben lässt, ist beschrieben in der PCT/EP99/05680 (WO 00/08371). Bei einer der dort beschriebenen Ausführungsformen dieser Adapter-Kupplung wird die Abdichtmanschette durch eine Verstärkungseinheit gestützt, die sich zwischen zwei Lagen dieser Abdichtmanschette befindet bzw. in diese quasi eingebettet ist.

Eine verbesserte Dichtungseinheit für eine derartige Adapter-Kupplung ist in der PCT/EP00/11642 (WO 01/38776) offenbart. Diese Dichtungseinheit weist nicht nur eine Verstärkungseinheit der beschriebenen Art auf, sondern ist auch mit einem Gleittrichter versehen, der außen von der Abdichtmanschette bzw. der Dichtung angeordnet ist und somit zu dem wasserabgebenden Ende eines Wasserhahnes etc. zeigt. Dieser Gleittrichter besteht aus einem radial außen umlaufenden, durchgehenden Ring, von dem sich mehrere, daran gelenkig verbundene Zungen nach radial innen zur zentralen Öffnung der Abdichtmanschette erstrecken.

Eine weiterhin verbesserte Adapter-Kupplung der hier in Rede stehenden Art ist beschrieben in der DE-A 101 57 445.2. Letztere Kupplung ist mit einer Trichtereinheit versehen, die aus mehreren separaten, die Dichtung stützenden, länglichen Verstärkungsrippen gebildet wird. Diese Verstärkungsrippen sind nebeneinander auf dem Umfang des Muffenrandes derart verteilt angeordnet, dass sie zusammen die Trichtereinheit bilden. Zur Herstellung letzterer Adapter-Kupplung ist es erforderlich, eine Vielzahl von Einzelteilen zusammenzufügen.

WO 2005/047754 und WO 2006/117134 offenbaren beide eine Adapter-Kupplung gemäss dem Oberbegriff des Anspruchs 1.

Ausgehend von diesem Stand der Technik ist es Aufgabe der vorliegenden Erfindung, eine einfacher aufgebaute, leicht zusammensetzbare und funktionssicherere Adapter-Kupplung bereitzustellen.

Gelöst wird diese Aufgabe durch die Adapter-Kupplung gemäß der Lehre der Ansprüche.

Ebenso wie bei der gattungsbildenden Kupplung ist bei der erfindungsgemäßen Adapter-Kupplung die Stützeinheit aus im wesentlichen zwei Elementen aufgebaut, nämlich aus einer ersten Ringscheibenverstärkung und einer zweiten Ringscheibenverstärkung. Beide Ringscheiben-verstärkungen besitzen einen äußeren, umlaufenden und durchgehenden Ringbereich, von dem sich mehrere, gleichmäßig auf dem Umfang verteilte, an ihrer Basis an dem Ringbereich angelenkte Zungen nach radial innen sowie schräg zur Längsachse erstrecken. Diese Zungen bilden zusammen den aufweitbaren Trichter. Mit anderen Worten, das eine Trichterfunktion wahrnehmende Stützeinheit verjüngt sich von der Seite her betrachtet nach innen zum Muffeninnenraum hin und zentriert somit das wasserabgebende Ende des Wasserauslaufes, wenn dieses Ende in den Muffeninnenraum eingeführt wird.

Die Zungen der ersten Ringscheibenverstärkung definieren im nicht aufgeweiteten Zustand der Dichtung zwischen sich einen Freiraum bzw. lassen einen Raum frei, in dem die Zungen der zweiten Ringscheibenverstärkung zu liegen kommen und diesen Raum zumindest teilweise ausfüllen. Auch die Zungen der zweiten Ringscheibenverstärkung definieren im nicht aufgeweiteten Zustand der Dichtung zwischen sich einen Freiraum bzw. lassen einen Raum frei, in dem die Zungen der ersten Ringscheibenverstärkung zu liegen kommen und diesen Raum zumindest teilweise ausfüllen.

Die Ringscheibenverstärkungen sind von der Größe und Form her somit derart ausgestaltet, dass, bezogen auf den nicht aufgeweiteten Zustand, die Zungen der ersten Ringscheibenverstärkung in dem Freiraum zwischen den Zungen der zweiten Ringscheibenverstärkung zu liegen kommen und diesen Freiraum zumindest im wesentlichen ausfüllen. Dies gilt auch vice versa.

Die Zungen beider Ringscheibenverstärkungen bilden zusammen eine Art flachen Ring. Die Zungen beider Ringscheibenverstärkungen liegen dabei insbesondere in einer Fläche, auf der die Dichtung abgestützt wird.

An mehreren Zungen und vorzugsweise an allen Zungen der ersten Ringscheibenverstärkung ist in der Nähe ihres radialen inneren Endes ein insbesondere streifenförmiger Fortsatz angebracht und insbesondere damit einstückig geformt, der sich nach axial innen und vorzugsweise in Axialrichtung erstreckt.

Diese Fortsätze ragen durch die zweite Ringscheibenverstärkung hindurch und greifen in die Taschen in der Dichtung ein, und zwar jeweils ein Fortsatz in eine Tasche.

Diese Fortsätze ragen insbesondere im Bereich der Freiräume zwischen den Zungen der zweite Ringscheibenverstärkung durch letztere hindurch.

Durch diese Fortsätze wird eine Art Verbindung zwischen der ersten Ringscheibenverstärkung und der Dichtung geschaffen. Die zweite Ringscheibenverstärkung wird quasi dazwischen eingespannt, so dass ein paketartiger Aufbau bzw. Verbundaufbau geschaffen wird, der über ein hohe Belastbarkeit und Funktionssicherheit verfügt.

Nach einer alternativen und bevorzugten Ausführungsform ist auf die Zungen der zweiten Ringscheibenverstärkung axial innen ein Stützteil aufgesetzt ist, das eine Öffnung besitzt. Innen im Stützteil ist ein Kanal ausgebildet, der ausgehend von der Öffnung bis zu einem Kanalabschnitt verläuft, der in einem sich im wesentlichen radial erstreckenden Stutzen ausgebildet ist. Der Fortsatz erstreckt sich durch die Öffnung des dazugehörigen Stützteils hindurch bis in den Stutzen und greift zusammen mit diesem Stutzen in die dazugehörige Tasche der Dichtung ein.

Nach einer bevorzugten Ausführungsform entspricht die Zahl der Zungen einer Ringscheibenverstärkung der Zahl der dazwischen liegenden Freiräume. Ferner entspricht vorzugsweise die Zahl der Zungen der ersten Ringscheibenverstärkung der Zahl der Freiräume der zweiten Ringscheibenverstärkung und vice versa.

Weiterhin bevorzugt verjüngen sich die Zungen in Aufsicht von der Basis ausgehend nach radial innen. Gleiches gilt dann auch für die zwischen den Zungen liegenden Freiräume.

Beim Einschieben des wasserabgebenden Endes in den Muffeninnenraum weitet sich der durch die Zungen gebildete Trichter auf, indem die Zungen um ihre Basis nach innen in den Muffeninnenraum weggeschwenkt werden. Dadurch vergrößert sich natürlich auch der Freiraum zwischen den Zungen. Es entstehen dabei Bereiche, in denen die Dichtung nicht mehr von den Zungen der Stützeinheit abgestützt wird.

Um letztere Bereiche zu überdecken, sind die Zungen der zweiten Ringscheibenverstärkung an ihren beiden sich radial erstreckenden Seitenrändern vorzugsweise mit jeweils einem Seitenflügel ausgestattet.

Diese Seitenflügel sind an den Zungen der zweiten Ringscheibenverstärkung zweckmäßigerweise in ihrem axial innen liegenden und somit zur Dichtung zeigenden Bereich angeordnet. Sind die beiden Ringscheibenverstärkungen zusammengesetzt, dann wechseln sich die Zungen der ersten Ringscheibenverstärkung mit den Zungen der zweiten Ringscheibenverstärkung ab. Die Seitenflügel der Zungen der zweiten Ringscheibenverstärkung liegen axial innen auf den axial innen liegenden Oberseiten der Zungen der axial äußeren, ersten Ringscheibenverstärkung auf und stützen sich darauf ab.

Beim Aufweiten des Trichters vergrößert sich natürlich auch der Raum zwischen den benachbarten Zungen der ersten und zweiten Ringscheibenverstärkung. Dieser zusätzliche Raum wird jedoch durch die Seitenflügel der Zungen der zweiten Ringscheibenverstärkung abgedeckt, die auch noch im aufgeweiteten Zustand auf den Zungen der ersten Ringscheibenverstärkung aufliegen. Somit kann die durch die Stützeinheit abgestützte Dichtung selbst bei Beaufschlagung mit hohem Wasserdruck nicht zwischen den Zungen der ersten und zweiten Ringscheibenverstärkung hindurchgedrückt werden. Die Dichtung wird somit auch im aufgeweiteten Zustand vollflächig unterstützt.

Um zu erleichtern, dass die Fortsätze durch die zweite Ringscheibenverstärkung hindurchragen können, wenn die Zungen der zweiten Ringscheibenverstärkung die beschriebenen Seitenflügel aufweisen, sind diese derart ausgestaltet, dass die aneinander angrenzenden Seitenflügel benachbarter Zungen ein Art Öffnung oder Durchlass definieren, durch welche sich die Fortsätze erstrecken.

Bedingt dadurch, dass die Zungen der zweiten Ringscheibenverstärkung beidseits jeweils einen Seitenflügel haben, ist es zudem möglich, die beiden Ringscheibenverstärkungen auf einfache Weise zusammenzusetzen. Sie müssen lediglich aufeinander gelegt werden.

Die Dichtung besitzt vorzugsweise in etwa die Form eines runden Tellers. Im Zentrum des Tellerbodens ist die zentrale Öffnung ausgebildet, welche vorzugsweise von einem Dichtring eingefasst ist. Der Tellerboden geht radial außen in einen verdickten Ringbereich über, in dem sich die Taschen befinden

Auf die Zungen der zweiten Ringscheibenverstärkung ist vorzugsweise axial innen ein Stützteil aufgesetzt, das eine Öffnung besitzt, durch das sich ein Fortsatz hindurch erstreckt.

Weiterhin bevorzugt sind im Muffeninnenraum zwei in etwa Ringe darstellende Sicherungsbügel derart angeordnet sind, dass sich die durch die Ringe aufgespannten Ebenen schneiden und einen nach axial innen gerichteten V-förmigen Einschubbereich bilden. In diesem Einschubbereich kommt das freie Ende des Wasserauslaufes zu liegen. Nach dessen Verdrehung verfängt sich der Perlator, mit dem ein derartiger Wasserauslauf üblicherweise ausgestattet ist, beim unbeabsichtigten Herausziehen des Wasserauslaufes an einem der Ringe, wodurch sichergestellt wird, dass der Wasserauslauf innerhalb der Muffe verbleibt und nicht weiter herausbewegt wird.

Die erfindungsgemäße Adapter-Kupplung wird im folgenden anhand der nachstehenden Zeichnungen näher erläutert, welche eine bevorzugte Ausführungsform wiedergeben. Von den Figuren zeigen:
- Figur 1: eine Seitenansicht einer erfindungsgemäßen Adapter-Kupplung, die auf das wasserabgebende Ende eines Wasserauslaufes eines Wasserhahnes aufgeschoben ist,
- Figuren 2 a bis c: eine Explosionsdarstellung einer weiteren Ausführungsform der in der Figur 1 gezeigten Adapter-Kupplung,
- Figur 3: eine perspektivische Ansicht der in der Figur 2 a gezeigten Muffe,
- Figur 4: zwei perspektivische Ansichten des in der Figur 2 c gezeigten Ringdeckels 30,
- Figur 5: eine perspektivische Ansicht des in der Figur 2 c gezeigten Aufdehnungsringes 40,
- Figur 6: vier perspektivische Ansichten der in der Figur 2 b gezeigten elastischen Dichtung 12, wobei zwei Ansichten geschnitten sind,
- Figur 7: drei perspektivische Ansichten der in der Figur 2 b gezeigten ersten Ringscheibenverstärkung 18, wobei eine Ansicht geschnitten ist,
- Figur 8: drei perspektivische Ansichten der in der Figur 2 b gezeigten zweiten Ringscheibenverstärkung 22, wobei eine Ansicht im Schnitt gezeigt ist,
- Figur 9: drei perspektivische Ansichten eines in der Figur 2 b gezeigten ringförmigen Stützelementes 44, wobei eine Ansicht geschnitten ist,
- Figur 10: drei perspektivische Ansichten eines in der Figur 2 a gezeigten glockenförmigen Einsatzes 45,
- Figur 11: zwei perspektivische Ansichten eines in der Figur 2 a gezeigten Ventileinsatzes 89,
- Figur 12: eine perspektivische Ansicht eines Sicherungsbügels 8 sowie dessen Befestigung an dem glockenförmigen Einsatz 45 (4 Ansichten),

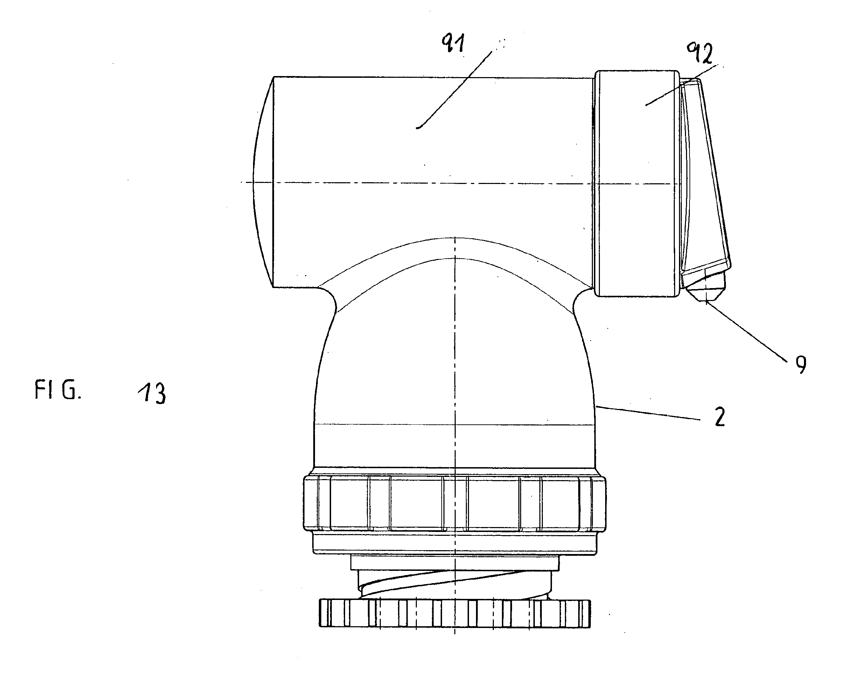

- Figur 13: eine Seitenansicht einer weiteren Ausführungsform der erfindungsgemäßen Adapter-Kupplung mit angesetzter Filtereinheit,
- Figur 14: zwei perspektivische Ansichten und eine Schnittansicht einer weiteren Ausführungsform für eine elastische Dichtung 12,
- Figur 15: einer Seitenansicht von erster Ringscheibenverstärkung 18, zweiter Ringscheibenverstärkung 22, einer weiteren Ausführungsform eines ringförmigen Stützelements 56 und der in der Figur 4 gezeigten elastischen Dichtung 12,

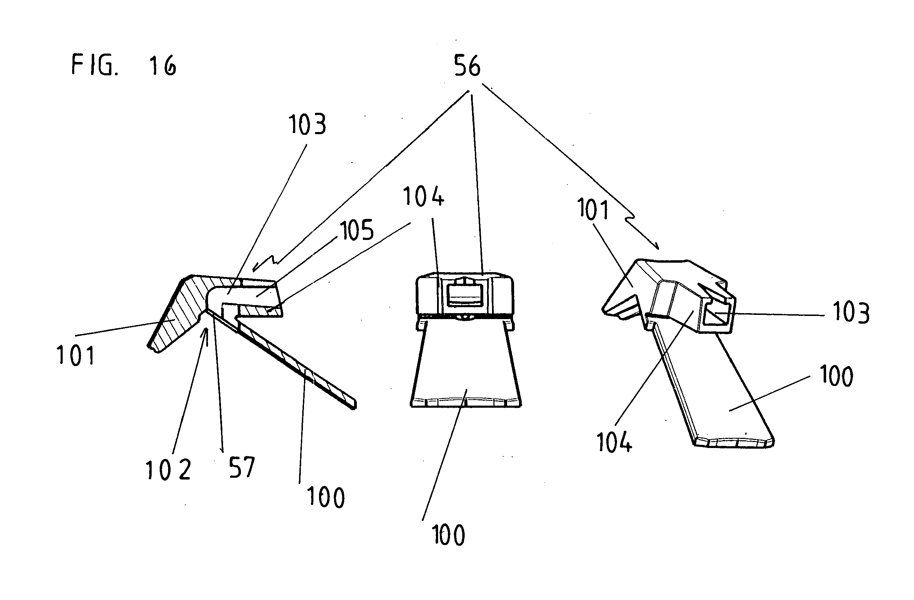

- Figur 16: eine perspektivische Ansicht von in etwa radial außen nach radial innen eines satteldachförmigen Stützteils 56 des in der Figur 15 gezeigten ringförmigen Stützelements 44 sowie eine Schnittansicht und eine Seitenansicht und

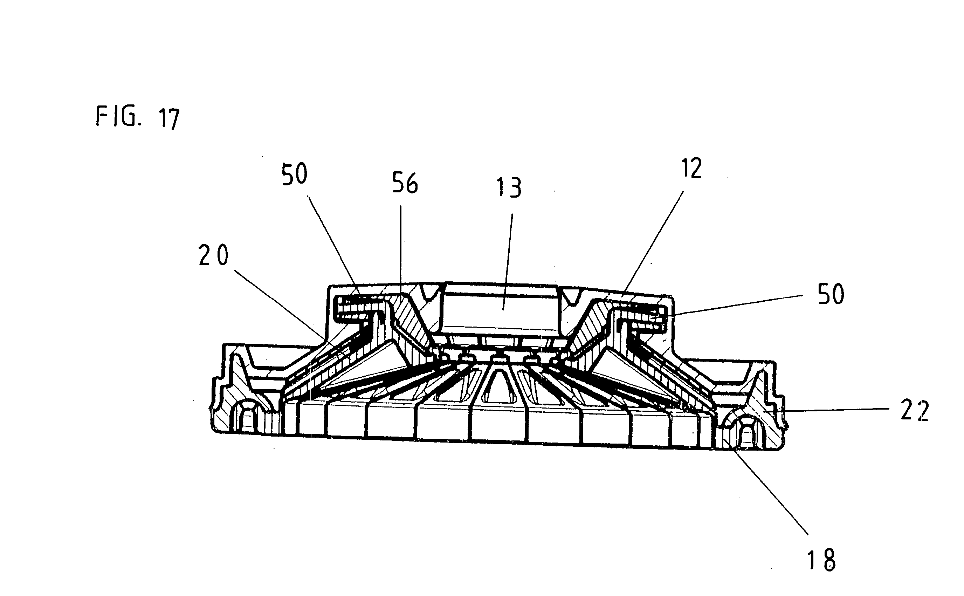

- Figur 17: eine Schnittansicht durch erste Ringscheibenverstärkung 18, zweite Ringscheibenverstärkung 22, Stützelement 44/satteldachförmiges Stützteil 56 und elastische Dichtung 12 gemäß der Figur 15 im zusammengebauten Zustand.

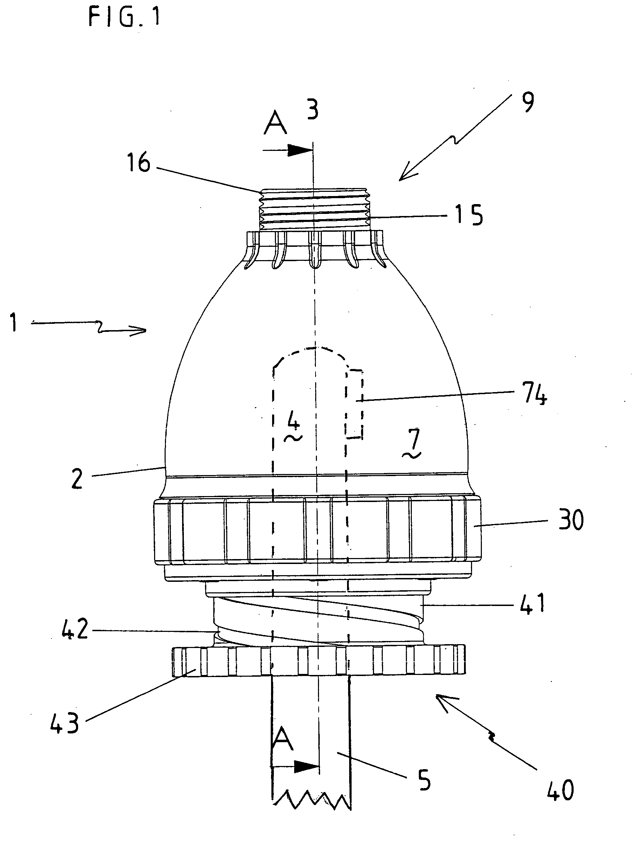

Die erfindungsgemäße Adapter-Kupplung 1 besitzt gemäß Figur 1 eine in etwa haubenförmige oder glockenförmige Muffe 2, die einen Wasserauslass 9 in Form eines mit einem Außengewinde 15 versehenen Auslaufstutzens 16 aufweist und in deren Muffeninnenraum 7 das wasserabgebende Ende 4 eines Wasserauslaufes 5 eingeschoben bzw. eingeführt ist. Der eigentliche Wasserhahn bzw. dessen Ventil ist dabei in der Figur 1 nicht gezeigt.

An den Auslaufstutzen 16 kann ein üblicher Wasserschlauch mit einer Gewindekappe oder ähnlichem auf per se bekannte Weise verbunden werden.

Die Figur 1 ist auch Bestandteil der eine gattungsgemäße Adapter-Kupplung beschreibenden, eingangs genannten WO 2006/117134 (PCT/EP2006/003938).

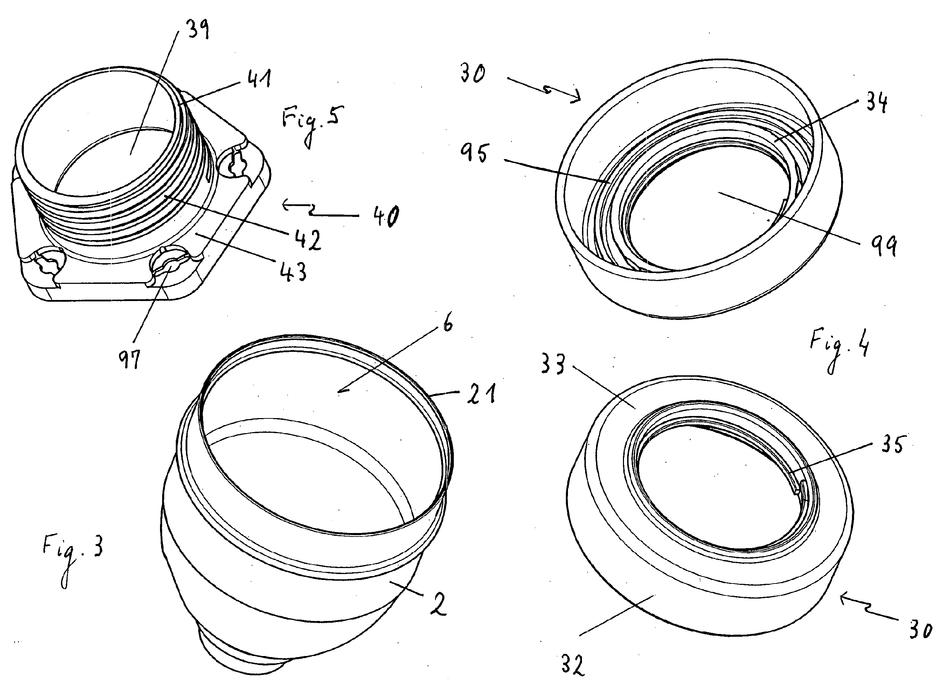

Dem Auslaufstutzen 16 axial gegenüberliegend befindet sich die Muffenöffnung 6, die von dem umlaufenden Rand 21 eingefasst wird, siehe Figur 3. Außen auf die Muffe 2 ist ein Ringdeckel 30 aufschiebbar (siehe auch Figur 4). Der Ringdeckel 30 besitzt einen axialen Abschnitt 32 und einen radialen Abschnitt 33, der eine zentrale Öffnung 105 einfasst, durch die der Wasserauslauf 5 eingeschoben werden kann.

Der radiale Abschnitt 33 des Ringdeckels 30 geht radial innen in einen sich axial nach innen erstreckenden zylindrischen Fortsatz 34 über.

Wenn im Rahmen der vorliegenden Unterlagen von axialer Richtung die Rede ist, dann bedeutet dies in Richtung der bzw. parallel zur Achse 3 der Muffe 2. Die Angaben "axial außen" bzw. "axial innen" beziehen sich auf eine Betrachtung in etwa vom Zentrum des Muffeninnenraumes 7 her in Richtung der Achse 3 nach außen und somit entweder zum Wasserauslass 9 und oder zur Muffenöffnung 7 hin.

in den sich axial erstreckenden zylindrischen Fortsatz 34 des Ringdeckels 30 greift ein Aufdehnungsring 40 mit einem zylindrischen Abschnitt 41 ein, auf dessen Außenmantelfläche ein Außengewinde 42 angeordnet ist, das mit einem Gewindegang 35 (man vergleiche Figur 4) an der Innenmantelfläche des zylindrischen Fortsatzes 34 zusammenwirkt. Auch dieser Aufdehnungsring 40 besitzt eine zentrale Öffnung 39.

Axial außen geht der zylindrische Abschnitt 41 des Aufdehnungsringes 40 in einem sich radial erstreckenden Flansch 43 über, der in Aufsicht in etwa die Form eines Pentagon besitzt. Ergreift der Benutzer diesen Flansch 43 und dreht er den Aufdehnungsring 40, dann verschiebt sich dieser in Axialrichtung und somit in Richtung der Achse 3, und zwar je nach Drehrichtung nach axial innen oder axial außen.

Zum Abdichten des Muffeninnenraumes 7 nach außen und gegenüber dem eingeschobenen Wasserauslauf 5 dient eine elastische Dichtung 12, die weiter unten näher beschrieben wird.

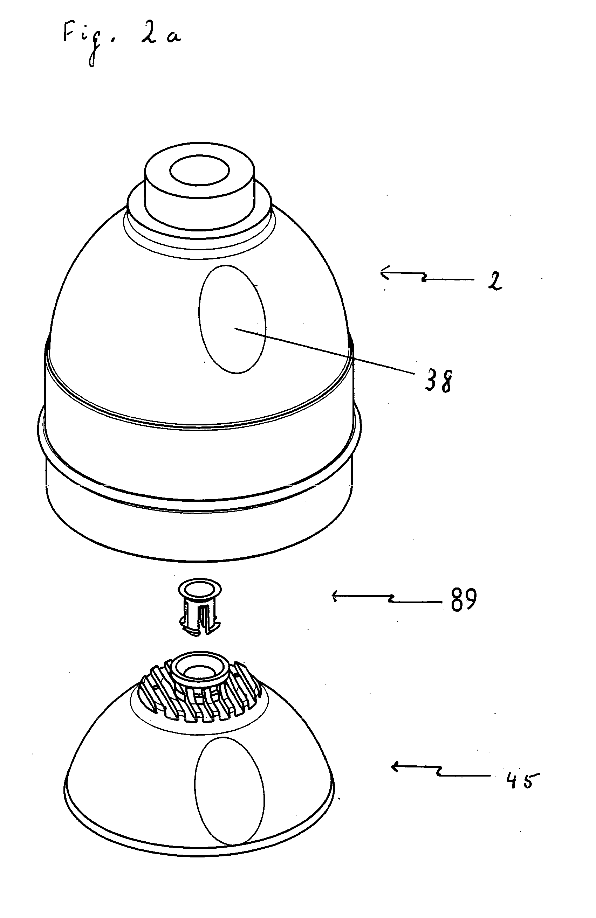

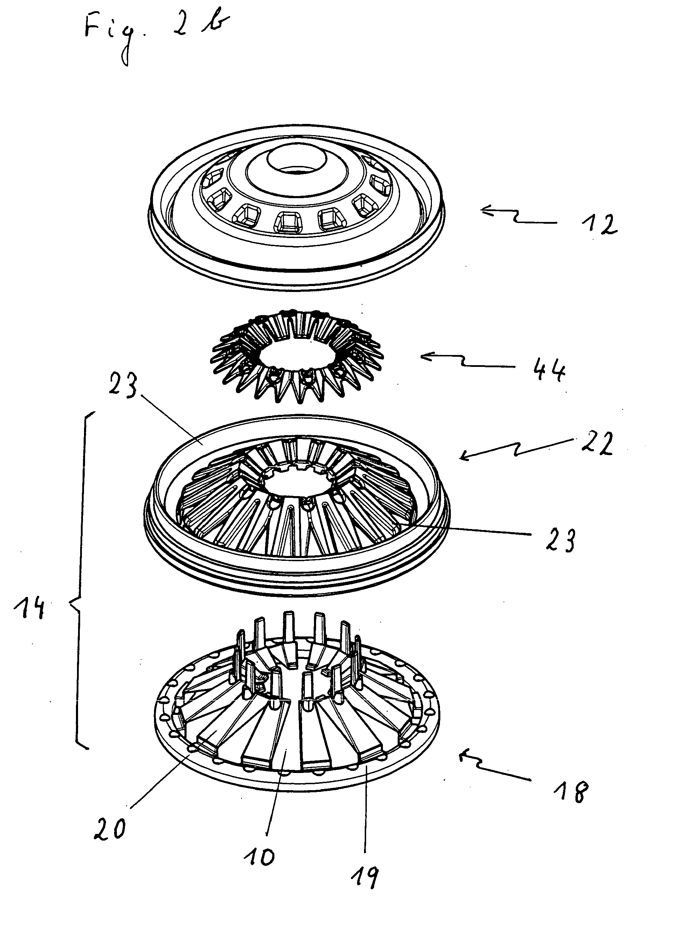

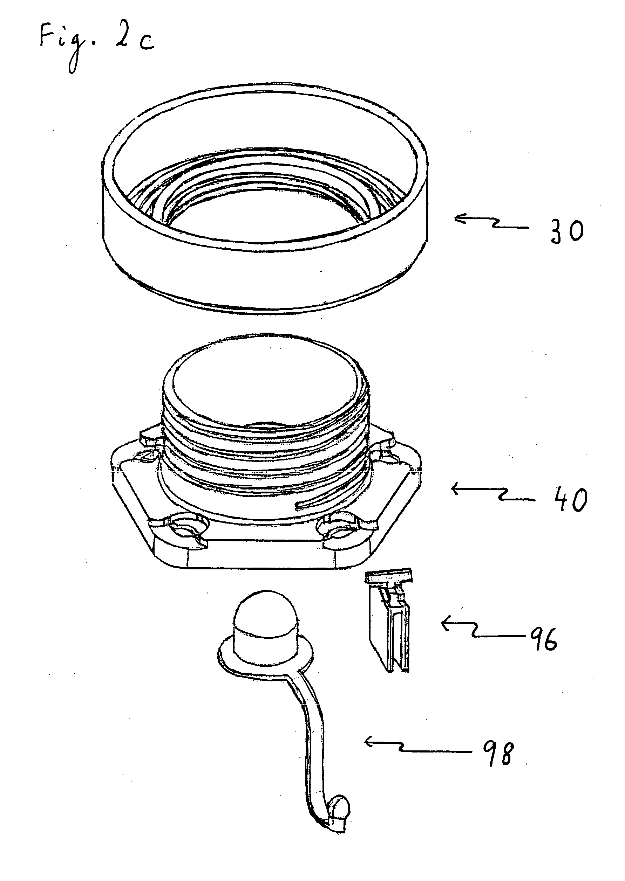

Um zu verhindern, dass diese Dichtung 12 durch den im Muffeninnenraum 7 herrschenden Wasserdruck nach axial außen gedrückt wird, dient eine Stützeinheit 14, die aus einer ersten Ringscheibenverstärkung 18 und einer zweiten Ringscheibenverstärkung 22 aufgebaut ist, man vergleiche Figur 2 b.

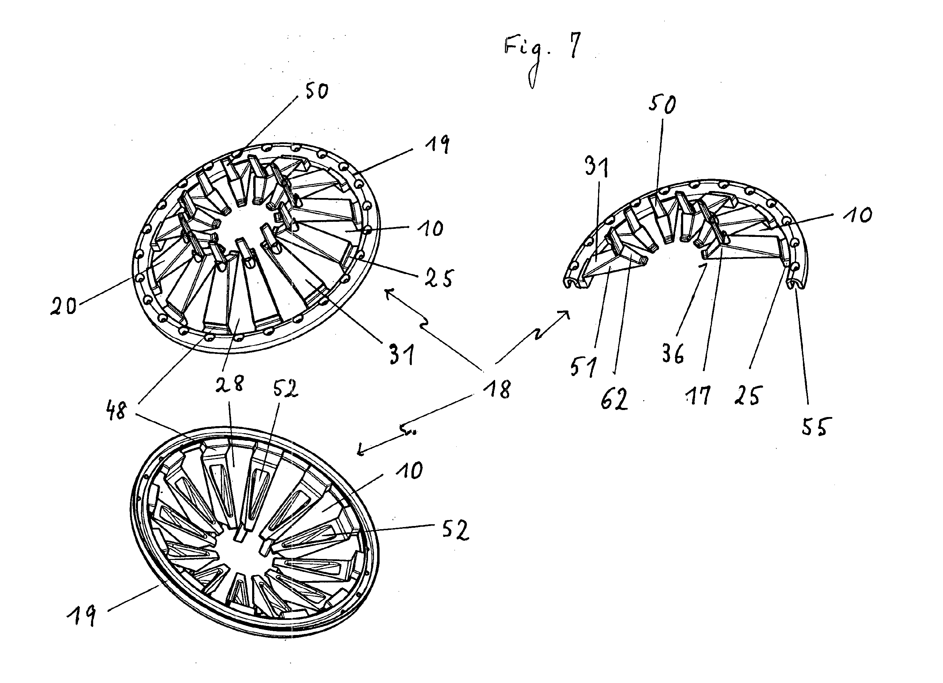

Die axial äußere erste Ringscheibenverstärkung 18 ist in der Figur 7 näher gezeigt. Diese Ringscheibenverstärkung 18 besitzt einen umlaufenden durchgehenden Ringbereich 19, von dem sich in Aufsicht leicht konisch nach radial innen verjüngende Zungen 20 nach radial innen erstrecken. Sie sind an ihrer Basis 25 mit Hilfe eines Filmscharniers an dem Ringbereich 19 angelenkt. Die Zungen 20 sind gleichmäßig verteilt auf dem Umfang beabstandet voneinander angeordnet. Zwischen diesen Zungen 20 wird ein Freiraum 10 definiert bzw. ein Raum 10 freigelassen. Somit sind auch die Freiräume 10 gleichmäßig in Umfangsrichtung verteilt angeordnet.

Die Zungen 20 besitzen in Seitenansicht in etwa die Form eines ungleichschenkligen Dreiecks. Der spitz zulaufende Winkel dieses Dreiecks zeigt zum Ringbereich 19 hin und ist dort mittels eines Filmscharniers angelenkt. Die Zungen 20 sind dabei nicht direkt an diesem Ringbereich 19 sondern über einen sich in etwa axial erstreckenden Verbindungsbereich 48 mit dem Ringbereich 19 verbunden, worauf nachstehend noch näher eingegangen wird. Zwischen den Verbindungsbereichen 48 benachbarter Zungen 20 ist eine Ausnehmung 28 vorhanden.

Der stumpfer zulaufende Winkel der Dreiecksform der Zungen 20 zeigt nach radial innen. Die längste Seite dieser Dreiecks liegt axial außen, während die beiden kürzeren Seiten axial innen liegen. Der Punkt, an dem sich die beiden kürzeren Seiten aneinander anstoßen, wird Gipfel 17 genannt und zeigt nach axial innen.

Die Zungen 20 besitzen axial außen eine mittige, sich radial erstreckende Nut, deren Tiefe von radial außen nach radial innen bis zum Gipfel 17 zunimmt und danach wieder abnimmt. Dadurch entsteht eine Art längliche, nach axial außen offene Aussparung 52 im Inneren der Zungen 20. Die Zungen 20 besitzen somit an dem radial inneren Ende 36 eine vordere Wand 62, deren Ebene bezüglich der Achse 3 geneigt ist und die sich von dem radial inneren Ende 36 bis zum Gipfel 17 erstreckt. Die Wände 62 aller Zungen 20 bilden eine Art sich nach axial innen öffnenden Trichter. Von dem Gipfel 17 erstreckt sich dann nach radial außen eine obere Wand 31 bis zum Verbindungsbereich 48. Ferner besitzen die Zungen 20 zwei Seitenwände 51, die sich in dem von der vorderen Wand 62 und oberen Wand 31 aufgespannten Fläche befinden und zwischen sich die Aussparung 52 einschließen.

Auf dem Gipfel 17 der Zungen 20 ist ein sich in axialer Richtung erstreckender streifenförmiger bzw. blättchenförmiger Fortsatz 50 vorhanden, dessen Funktion weiter unten näher erläutert wird.

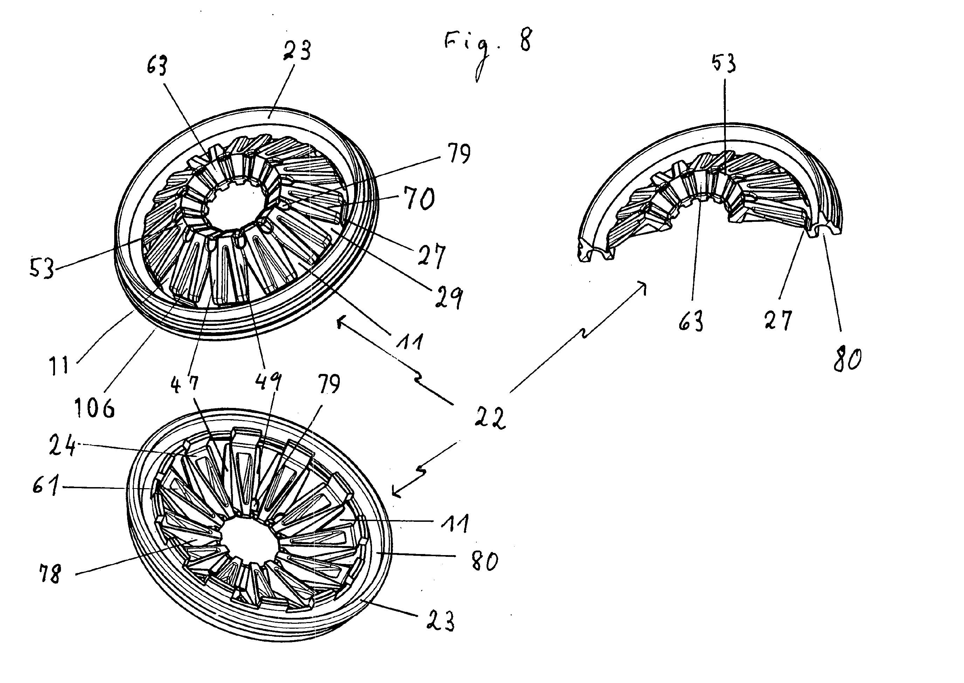

Bei dem zweiten Element der Stützeinheit 14 handelt es sich um die in den Figur 8 näher gezeigte zweite Ringscheibenverstärkung 22, die ähnlich aufgebaut ist wie die oben beschriebene erste Ringscheibenverstärkung 18. So besitzt auch die zweite Ringscheibenverstärkung 22 einen umlaufenden Ringbereich 23, von dem sich mehrere auf dem Umfang gleichmäßig verteilte Zungen 24 nach radial innen erstrecken. Zwischen diesen Zungen 24 sind Freiräume 11 ausgebildet. Die Zungen 24 verjüngen sich, in axialer Aufsicht betrachtet, leicht konisch nach radial innen sind und sind an ihrer Basis 27 an dem umlaufenden Ringbereich 23 beweglich mittels eines Filmscharniers angelenkt.

Auch die Zungen 24 besitzen in Seitenansicht in etwa die Form eines ungleichschenkligen Dreiecks. Diese Dreiecksform entspricht in etwa der Dreiecksform der Zungen 20. Auch die Ausgestaltung der Zungen 24 entspricht in etwa der Ausgestaltung der Zungen 20. So besitzen die Zungen 24 eine obere Wand 70, eine vordere Wand 63, einen Gipfel 53 und zwei Seitenwände 78 mit einer dazwischen liegenden Aussparung 61. Auch die vorderen Wände 63 am radial inneren Ende 37 der Zungen 24 bilden einen sich nach axial innen öffnenden Trichter.

Die Zungen 24 besitzen an ihren beiden sich radial erstreckenden Seitenrändern jeweils einen Seitenflügel 47, 49, die sich ebenfalls radial erstrecken. Die Seitenflügel 47, 49 sind an dem axial inneren Bereich der Zungen 24 in der Art eines "Topdeckers" angebracht, überdecken zumindest teilweise den Freiraum 11 und liegen im zusammengebauten Zustand der Adapterkupplung auf den oberen Wänden 31 der Zungen 20 der ersten Ringscheibenverstärkung 18 auf.

Die Breite der Seitenflügel 47, 49 vergrößert sich geringfügig ausgehend von der Basis der Zungen 24 nach radial innen, und zwar soweit, dass sich die gegenüberliegenden Seitenflügel 47, 49 benachbarter Zungen 24 im nicht aufgeweiteten Zustand im radial innen liegenden Drittel berühren Allerdings erstrecken sich die Seitenflügel nicht bis zum Gipfel 53 sondern enden vorher. Dadurch wird radial außen vom Gipfel 53 von sowie benachbart zum Gipfel 53 eine Öffnung bzw. ein Durchlass 79 gebildet. Zwischen den beiden Seitenflügeln 47, 49 befindet sich eine Art radial erstreckende Nut 106.

Der umlaufende Ringbereich 19 der ersten Ringscheibenverstärkung bildet eine U-förmige Rinne 55 (Figur 7), deren Basis nach axial innen zeigt und die somit nach axial außen offen ist. Der umlaufende Ringbereich 23 der zweiten Ringscheibenverstärkung 22 bildet ebenfalls eine U-förmige Rinne 80 (Figur 8), deren Basis nach axial innen zeigt und die somit nach axial außen offen ist. Diese U-förmige Rinne 80 ist derart gestaltet, dass die Nut 55 der ersten Ringscheibenverstärkung möglichst formschlüssig in der Nut 80 zu liegen kommt.

Beim Einsetzen der ersten Ringscheibenverstärkung 18 in die zweite Ringscheibenverstärkung 23 bzw. bei derem Aufeinandersetzen werden die Fortsätze 50 der ersten Ringscheibenverstärkung 18 in die Durchlässe 79 der zweiten Ringscheibenverstärkung 22 eingeführt und erstrecken sich im zusammengebauten Zustand durch diese Durchlässe nach axial innen hindurch. Die Zahl der vorhandenen Zungen 20 entspricht im übrigen der Zahl der vorhandenen Zungen 24.

Ferner kommen beim Einsetzen der ersten Ringscheibenverstärkung 18 in die zweite Ringscheibenverstärkung 23 die Zungen 20 und 24 in etwa auf der gleichen axialen Höhe bzw. Ebene zu liegen. Die Zungen 20 kommen dabei im Freiraum 11 zwischen den Zungen 24 zu liegen und füllen diesen mehr oder weniger aus, während die Zungen 24 in dem Freiraum 10 zwischen den Zungen 20 zu liegen kommen und diesen mehr oder weniger ausfüllen. Die Zungen 20 und 24 bilden somit im nicht aufgeweiteten Zustand einen fast durchgehenden Ringbereich zur Anlage an die Dichtung 12. Damit die Zungen 20 und 24 auf in etwa der gleichen axialen Höhe angeordnet sind, sind die Zungen 20 der ersten Ringscheibenverstärkung 18 über den oben beschriebenen, sich axial erstreckenden Verbindungsbereich 48 mit dem dazugehörigen Ringbereich 19 verbunden. Der Verbindungsbereich 48 kommt in einer Ausnehmung 29 zwischen der Basis 27 von zwei benachbarten Zungen 24 zu liegen, während die Basis 27 der Zungen 24 in einer Ausnehmung 28 der ersten Ringscheibenverstärkung 18 zu liegen kommen.

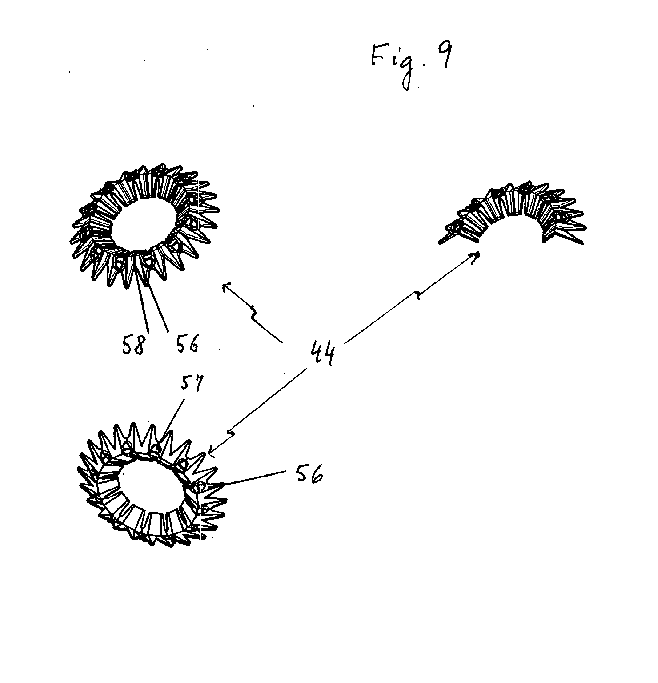

Bei dem in der Figur 9 gezeigten ringförmigen Stützelement 44 handelt es sich um ein aus mehreren satteldachförmigen Stützteilen 56 aufgebautes Spritzteil. Diese satteldachförmigen Stützteilen 56 müssen vor dem Einbau noch entlang der Linie 58 voneinander getrennt werden, so dass separate Stützteile 56 erhalten werden, die jeweils eine Öffnung 57 besitzen. Diese Stützteile werden auf die Zungen 24 derart aufgesetzt, dass der Fortsatz 40 durch die Öffnung 57 hindurchragt. Die Stützteile 56 sind liegen somit im Bereich des Gipfels 53 auf den Zungen 24 axial innen auf und überbrücken den Spalt zwischen benachbarten Zungen 24. Sie sind zwischen der zweiten Ringscheibenverstärkung und der nachstehend näher beschriebenen Dichtung 12 angeordnet.

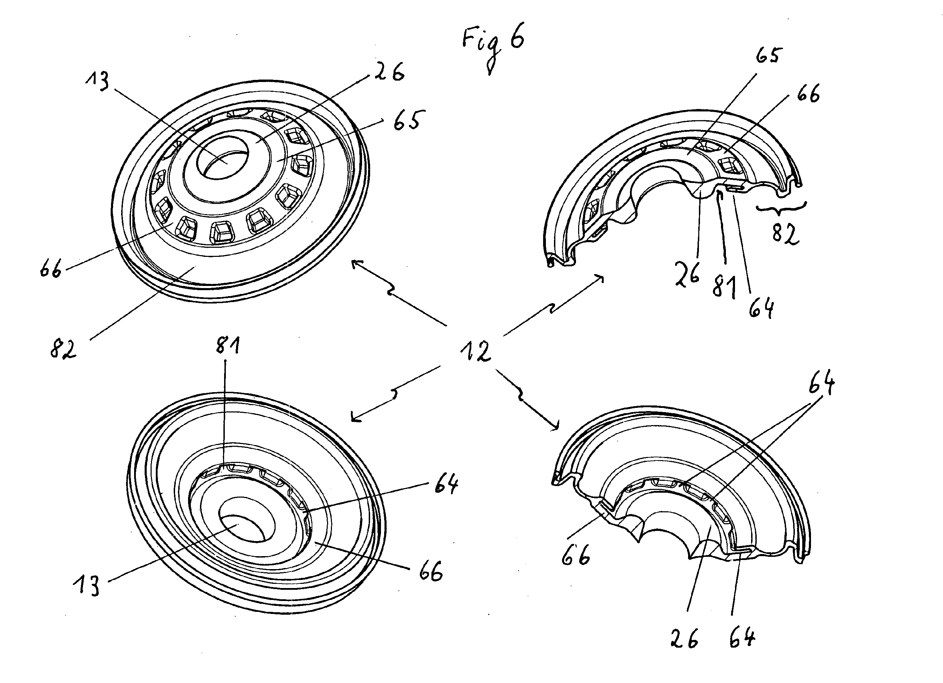

Die in der Figur 6 gezeigte elastische Dichtung 12 besteht aus einem elastischen Material, z. B. einem Gummimaterial oder einem Silikonmaterial, und besitzt eine zentrale Öffnung 13, durch welche das wasserabgebende Ende 4 eines Wasserauslaufes 5 eingeschoben werden kann. Diese Öffnung 13 wird durch einen Dichtring 26 eingefasst.

Die Dichtung 12 besitzt in etwa die Form eines runden Tellers mit einem Tellerboden 65, in dessen Zentrum die zentrale Öffnung 13 ausgebildet ist. Der Tellerboden 65 geht radial außen in eine verdickten umlaufenden Ringbereich 66 über. In diesem Ringbereich 66 sind Taschen 64 ausgebildet, die sich radial erstrecken und nur nach radial innen hin offen sind bzw. eine Öffnung 81 besitzen. Diese Öffnung 21 ist von der axial außen liegenden Seite der Dichtung 12 zugänglich. Die Anzahl der Taschen 64 entspricht dabei der Anzahl der Fortsätze 50.

Radial außen vom Ringbereich 66 geht die Dichtung 12 in einen äußeren umlaufenden Ringbereich 82 über, der - bezogen auf den Querschnitt - in etwa formkongruent zum axial innen liegenden Bereich des Ringbereiches 23 der zweiten Ringscheibenverstärkung 22 ausgestaltet ist, so dass die Dichtung 12 auf die zweite Ringscheibenverstärkung 22 passend aufgesetzt werden kann.

In den Taschen 64 der Dichtung 12 kommen die streifenartigen Fortsätze 50 zu liegen bzw. ragen in diese Taschen hinein. Dazu müssen sie ausreichend flexibel sein, um von einer axialen Ausrichtung in eine radiale Richtung umgebogen werden zu können. Diese Fortsätze 50 schaffen eine Art einer Verbindung zwischen den Zungen 20 und der Dichtung 12. Sie halten diese Einheit aus erster 18 und zweiter 22 Ringscheibenverstärkung sowie Stützteil 56 und Dichtung 12 zusammen.

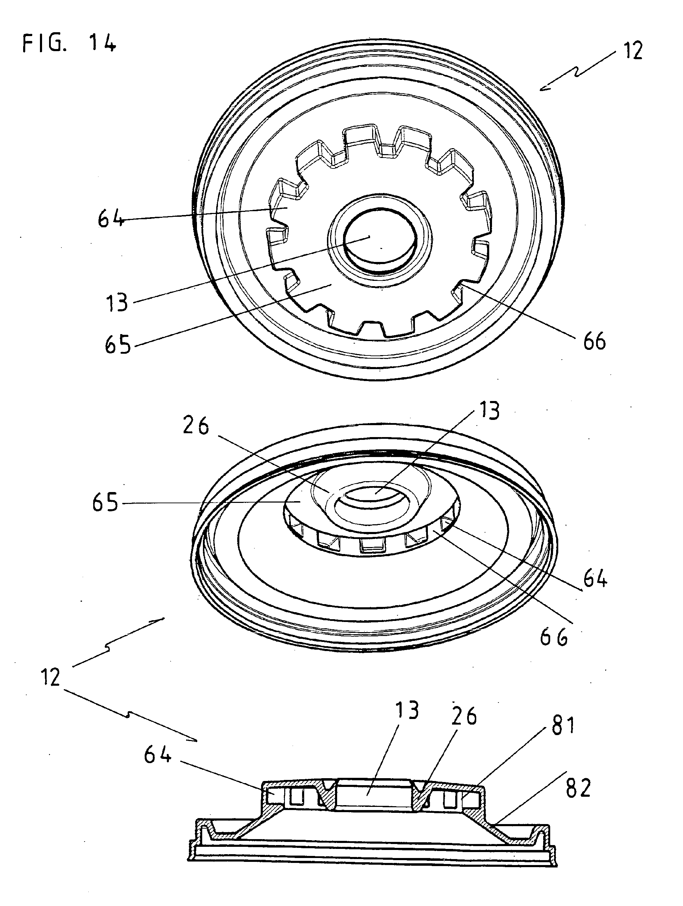

In der Figur 14 ist eine weitere vorteilhaft Ausführungsform einer elastischen Dichtung 12 gezeigt, die in vielerlei Hinsicht mit der bereits oben beschriebenen elastischen Dichtung 12 übereinstimmt, jedoch auch einige Unterschiede aufweist. Daher werden gleiche Teile mit gleichen Bezugszeichen versehen.

In der Figur 14 ist diese zweite Ausführungsform der Dichtung 12 in einer Schnitteinsicht sowie in zwei perspektivischen Ansichten dargestellt.

Auch diese Dichtung 12 besteht aus einem elastischen Material, beispielsweise einem Gummimaterial oder einem Silikonmaterial, und besitzt eine zentrale Öffnung 13, die durch einen Dichtring 26 eingefasst wird.

Auch diese Ausführungsform der Dichtung 12 besitzt in etwa die Form eines runden Tellers mit einem Tellerboden 65. Allerdings ist dieser Tellerboden 65 flacher als bei der oben beschriebenen Ausführungsform. Der Tellerboden 65 geht radial außen in einen Ringbereich 66 über, der sich in etwa senkrecht zum Tellerboden 65 erstreckt.

In diesem Ringbereich 66 sind mehrere gleich große sowie gleichmäßig beabstandete Taschen 64 ausgebildet, die sich vom Ringbereich 66 nach radial außen erstrecken. Diese Taschen 64 sind lediglich nach radial innen offen und bilden somit einen einseitig offenen Hohlraum. Der Querschnitt dieser Taschen in Umfangsrichtung ist in etwa rechteckig oder quadratisch. In Aufsicht von axial innen nach axial außen ergibt sich eine Art Zahnrad oder Zahnkranz.

Auch bei dieser Ausführungsform der Dichtung 12 sind die nach radial innen hin zeigenden Öffnungen der Taschen 64 mit der Bezugszahl 81 versehen.

Radial außen vom Ringbereich 66 geht die Dichtung 12 in einen äußeren umlaufenden Ringbereich 82 über, der radial innen beginnend nach radial außen hin einen kuppelartigen Bereich besitzt und noch weiter radial außen derart ausgestaltet ist, dass er auf den Ringbereich 23 der zweiten Ringscheibenverstärkung 22 passend aufgesetzt werden kann.

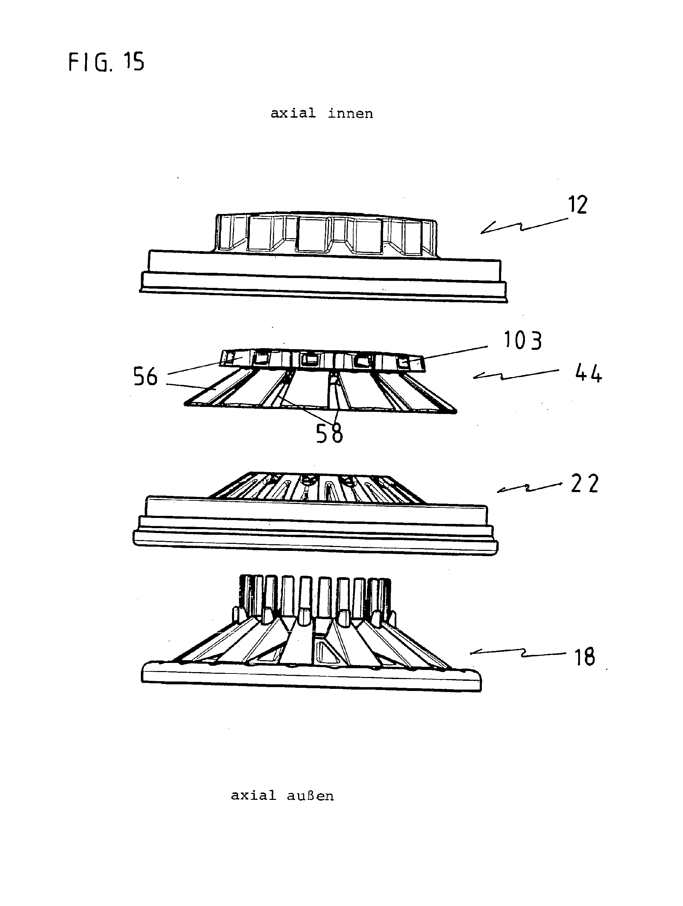

Diese zweite Ausführungsform der Dichtung 12 wirkt mit einer zweiten Ausführungsform eines ringförmigen Stützelementes 44 zusammen, das in der Figur 15 in Seitenansicht gezeigt ist. Dieses Stützelement stellt nun kein einzelnes zusammenhängendes Teil dar, sondern ist aus mehreren separaten und daher voneinander getrennten satteldachförmigen oder winkelförmigen Stützteilen 56 aufgebaut. Auch in diesem Falle wird das Stützelement 44 einstückig spitzgeformt und entsprechend der Linie 58 getrennt.

Die einzelnen Stützteile 56 besitzen ein flaches plattenförmiges Element 100 und ein keilförmiges Element 101, die einen Winkel 102 miteinander bilden, an dem das Stützteil 56 im Bereich des Gipfels 53 auf den Zungen 24 der zweiten Ringscheibenverstärkung 22 aufliegt.

Auch bei dieser zweiten Ausführungsform des Stützteils 56 ist eine Öffnung 57 in dem genannten Bereich des Winkels 102 vorhanden. Diese Öffnung ist jedoch nicht axial durchgehend. Vielmehr stellt diese Öffnung 57 eine der Öffnungen eines Kanals 103 dar, der beginnend bei der Öffnung 57 sich erst einmal in Axialrichtung erstreckt und dann umbiegt und dann sich dann weiter in Radialrichtung erstreckt.

Das Stützteil 56 besitzt bei dieser zweiten Ausführungsform somit einen zusätzlichen, sich in etwa radial erstreckenden Kanalabschnitt 105, der eine Art Stutzen 104 darstellt. Dieser Stutzen 104 hat in etwa Quaderform.

Auch bei dieser zweiten Ausführungsform des Stützteils 56 wird der streifenartige Fortsatz 50 eingeführt. Allerdings erstreckt sich der streifenartige Fortsatz 50 der ersten Ringscheibenverstärkung 18 nicht durch die Öffnung 57 hindurch, sondern wird aufgrund der geometrischen Form des Kanals 102 beim Einführen in Axialrichtung nach radial außen umgebogen und ragt dann in den Kanalabschnitt 105 bzw. den Stutzen 104 hinein bzw. mündet dort.

Im zusammengebauten Zustand ragt somit dieser Stutzen 104 zusammen mit dem darin befindlichen Fortsatz 50 in die dazugehörige Tasche 54 der zweiten Ausführungsform der Dichtung 12 hinein. Die Form und Größe der Taschen 54 der Dichtung 12 sind derart gewählt, dass sie der Form und den Dimensionen des Stutzens 104 in etwa entsprechen. Auf diese Weise wird der Zusammenhalt der Einheit aus erster 18 und zweiter 22 Ringscheibenverstärkung sowie Stützteil 56 und Dichtung 12 verbessert. Außerdem wird die Abstützung der auf dem flachen plattenförmigen Element aufliegende Dichtung 12 verbessert.

Im nicht aufgeweiteten Zustand werden die Freiräume 10, 11 einer Ringscheibenverstärkung 18, 22 durch die Zungen 20, 24 der jeweils anderen Ringscheibenverstärkung 18, 22 in etwa ausgefüllt. Beim Einschieben des wasserabgebenden Endes 4 werden diese Zungen unter Aufweitung der zentralen Öffnung 13 der Dichtung nach außen weggeschwenkt. Dadurch vergrößern sich natürlich auch die Freiräume 11 bzw. 10 zwischen den dazugehörigen Zungen. Dieser erweiterte Freiraum wird nun durch die Flügel 47 und 49 der zweiten Ringscheibenverstärkung 22 abgedeckt. Es ergibt sich kein freier Zwischenraum bzw. kein Spalt, durch welche die Dichtung 12 hindurchgedrückt werden könnte. Beim aufgeweiteten Trichter ist lediglich der Abstand der Seitenränder der Seitenflügel 47, 49 vergrößert. so dass für die Dichtung 12 nach wie vor eine im wesentlichen durchgehende vollständige Auflagefläche bzw. Andruckfläche der Stützeinheit 14 zur Verfügung steht. Das elastische Dichtungsmaterial kann nicht an irgendeiner Stelle nach außen hindurchgedrückt werden.

Die Ringscheibenverstärkungen 18 und 22 und die Stützteile 56 bestehen vorzugsweise aus Kunststoff (z. B PP oder PE) und werden weiterhin vorzugsweise durch Spritzformen hergestellt.

Die Dichtung 12 ist im übrigen einstückig; die hier erwähnten Elemente, z. B. Dichtring 26 und äußerer Ringbereich 82 usw. dienen zur Erläuterung von Abschnitten und Bereichen der Dichtung 12.

Beim Drehen des Verstellringes 40 kommt dieser mit seinem zylindrischen Abschnitt 41 gegen die Zungen 20, 24 der Stützeinheit 14 in Anlage, gleitet an ihnen entlang und schiebt sie zur Seite, so dass sie nach außen verschwenkt werden. Die Zungen 20, 24 nehmen die Dichtung mit und weiten die zentrale Öffnung 13 und damit den Dichtring 26 auf, so dass das wasserabgebende Ende 4 in den Muffeninnenraum 7 hineingeschoben werden kann, ohne in Kontakt mit der Dichtung 12 zu gelangen. Danach wird der Verstellring 40 hinausgedreht, so dass sich der Dichtring 26 wieder zusammenzieht und an die Außenmantelfläche des Wasserauslaufes 50 unter fluiddichter Abdichtung anlegt. Wird dann der Muffeninnenraum mit Wasser gefüllt und die Dichtung 12 mit Druck beaufschlagt, dann kann die Dichtung 12 aufgrund der Auflage auf der Stützeinheit 14 bzw. den Zungen 20 und 24 und den dazugehörigen Flügeln 47, 49 nicht nach außen vorgestülpt werden, denn diese Einheit bildet eine Art nach innen gewölbter Kupplung.

Zum Abnehmen der Adapter-Kupplung 1 wird dann der Verstellring 40 wieder hineingeschraubt, so dass das wasserabgebende Ende 4 des Wasserauslaufes 5 ohne Schwierigkeiten und ohne Verletzung der Dichtung 12 und insbesondere des Dichtringes 26 herausgezogen werden kann.

In den Muffeninnenraum 7 ist ein glockenförmiger Einsatz 45 eingebracht, der eine zentrale Öffnung 59 besitzt, die mit der Öffnung im Auslaufstutzen 16 fluchtet. Diese glockenförmige Einsatz ist oben abgeflacht und bildet dort einen in etwa kreisscheibenförmigen Dachbereich 71, von dessen Zentrum sich ein Stutzen 67 in Axialrichtung erstreckt, der die Öffnung 59 einfasst.

Der obere Innenrand 75 ist abgeschrägt, so dass er sich trichterförmig nach axial außen erweitert. Am unteren Innenrand der Öffnung 59 ist ein umlaufende, nach radial außen gerichteter Absatz vorgesehen.

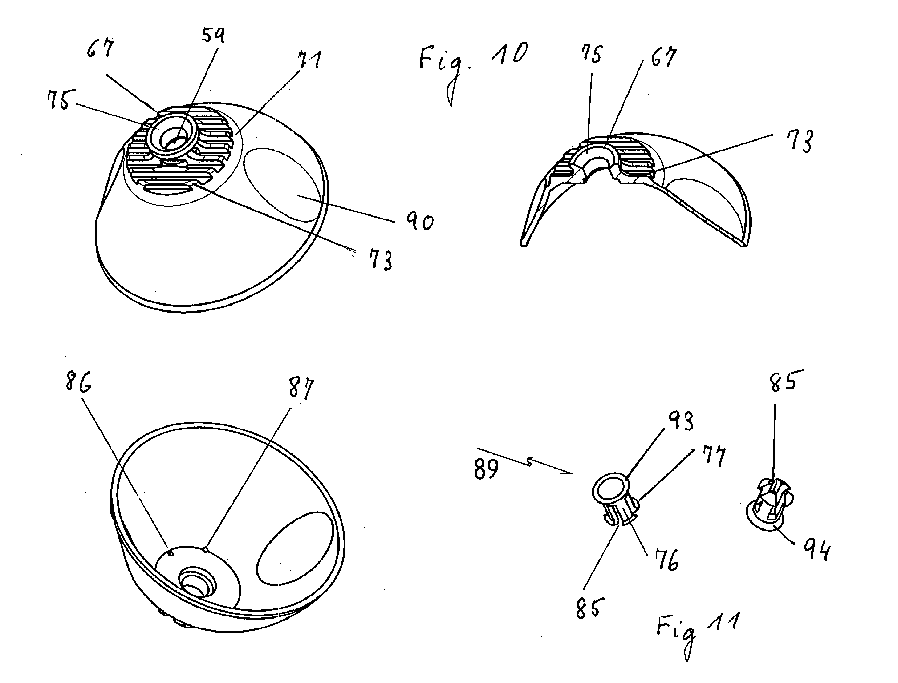

in die Öffnung 59 ist von außen der in der Figur 11 gezeigte Ventileinsatz 89 einsetzbar. Dieser Ventileinsatz 89 besitzt eine scheibenförmige Basis 93, dessen Außenrand 94 abgeschrägt ist, so dass der Ventileinsatz 89 mit diesem Außenrand 94 auf dem sich nach außen erweiternden Innrand 75 der Öffnung 59 zu liegen kommt und die Öffnung 59 verschließt.

Von den scheibenförmigen Basis 93 erstrecken sich zum Muffeninnenraum 7 hin vier Stege 76 in Axialrichtung, die an ihrem freien Ende eine nach radial außen vorspringenden Absatz 77 besitzen. Dieser Ventileinsatz 89 wird in die Öffnung 59 eingeschoben. Dabei gleiten die Stege 76 an der Abschrägung des Innenrandes 75 entlang, wobei sie zusammengedrückt werden. Sobald die Absätze77 der Stege 76 den Absatz 84 am unteren innenrand erreicht haben, werden sie wieder nach radial außen gedrückt. Die axiale Länge der Stege 76 ist dabei größer als die axiale Länge der Öffnung 59. Liegt der Außenrand 94 des Ventileinsatzes 89 auf dem Innenrand 75 auf, sind die Absätze 77 der Stege 76 vom Absatz 84 axial beabstandet.

Ist der Ventileinsatz 89 vollständig hintergreifen die Absätze 77 der Stege 76 den Rand des umlaufenden Vorsprungs 91 des Zylinders 86.

Bei Druckbeaufschlagung drückt das Wasser im Muffeninnenraum 7 den Ventileinsatz 89 nach außen, bis die Absätze 77 in Anlage gegen den Absatz 84 kommen. Der Ventileinsatz 89 wird dann in dieser Position gehalten. Das Wasser kann durch die Zwischenräume 85 zwischen den Stegen 76 nach außen gelangen. Sollte das Wasser einmal zurückfließen, wird die scheibenförmige Basis 94 auf den Innenrand 75 gedrückt und verschließt die Öffnung 59. Die Öffnung 59 bzw. der Stutzen 67 stellt im Zusammenspiel mit dem Ventileinsatz 89 somit ein Rückschlagventil dar.

Auf dem Dachbereich 71 sind mehrere parallele Rippen 72 ausgebildet, die zwischen sich parallel zueinander verlaufende Rinnen 73 definieren. Zudem weist der Dachbereich zwei Paare von durchgehenden Bohrungen 86, 87 und somit insgesamt vier Bohrungen auf, die in einer Rinne 73 münden und die zu der Achse 3 den gleichen Abstand besitzen.

Diese Bohrungen 86, 87 dienen zur Befestigung von zwei Sicherungsbügeln 8. Diese Sicherungsbügel 8 bestehen aus einem fast geschlossenen und somit offenen Ring 87, der an seinen offenen Enden jeweils in einen geraden Endabschnitt 88 übergeht. Die beiden Endabschnitte 88 eines Ringes 87 verlaufen parallel zueinander; die dadurch aufgespannte Ebene mit der durch den Ring 87 gebildeten Ebene einen Winkel α von kleiner 90°.

Durch die Bohrungen 86 eines Paares wird jeweils ein Endabschnitt eines in der Figur 8 gezeigten Sicherungsbügels 8 von axial innen nach axial außen hindurchgeschoben und dann umgebogen, so dass die Endabschnitte in den zugehörigen Rinnen 73 zu liegen kommen. Dort werden sie befestigt, beispielsweise durch Einklemmen oder Verkleben. Da der Winkel α kleiner als 90° ist, verlaufen die durch die Ringe 87 aufgespannten Ebenen schräg zur Achse und kreuzen sich zudem.

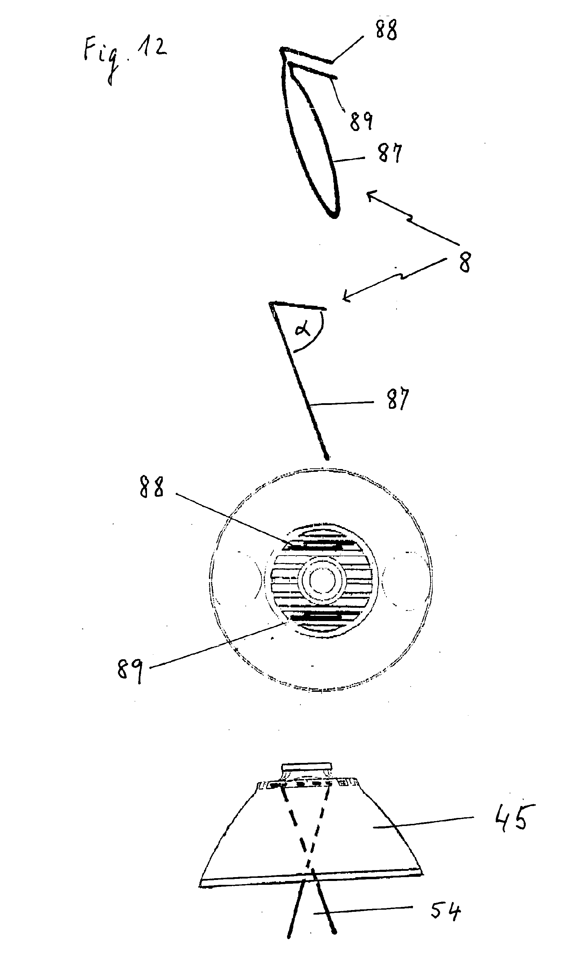

Die beiden Sicherungsbügel 8 bilden einen nach axial innen und somit zum Muffeninnenraum 7 zeigenden V-förmigen Einschubbereich 54, in den das wasserabgebende Ende 4 des Wasserauslaufes 4 bei dessen Einführung in die Muffe 2 mit dem Perlator 74 eingeschoben wird, wobei die Ebene des Perlators 74 senkrecht (in der Figur 12 in der Papierebene) zu den von den Ringen 87 aufgespannten Ebenen (in der Figur 12 senkrecht zur Papierebene) liegt. Dann wird der Wasserauslauf 5 um 90° gedreht, so dass der Perlator 74 bei einer ungewollten Bewegung aus dem Einschubbereich 54 heraus gegen einen der Ringe von innen der Ringe her in Anlage kommt, wodurch ein weiteres Herausbewegen des Wasserauslaufes gestoppt wird. Zum bewussten Herausziehen des Wasserauslaufes 5 wird er zuvor erneut um 90° um seine Längsachse gedreht, so dass der Perlator wieder in "die Papierebene gelangt.

Um die Winkellage des glockenförmigen Einsatzes 45 bezüglich der Muffe 2 ausrichten zu können, besitzen sowohl die Muffe 2 als auch der glockenförmige Einsatz 45 in ihrer Wandung zwei diametral gegenüberliegenden nach innen gerichtete in etwa formkongruente Ausbuchtungen, während auf der anderen Seite der Wandung Vertiefungen ausgebildet sind. Befindet sich der Einsatz in der richtigen Drehwinkellage, kommt die Ausbuchtung 38 an der Innenwandung der Muffe 2 in der damit korrespondierende Vertiefung in der Außenwandung des Einstzes 45 zu liegen. Durch die Vertiefung in der Muffe 2 wird auf diese Weise auch die Winkellage des Einsatzes 45 sowie der Sicherungsbügel 8 angezeigt.

Fast alle Teile, aus denen die erfindungsgemäße Adapter-Kupplung 1 aufgebaut ist, können durch Spritzformen hergestellt werden. Vorzugsweise handelt es sich somit bei diesen Teilen um aus Kunststoff gefertigte Elemente. Lediglich die Dichtung 12 besteht aus einem elastischen Gummi- bzw. Silikonmaterial. Zudem besteht der Sicherungsbügel 8 aus Metall. Die Adapter-Kupplung lässt sich fast vollständig durch Ineinanderstecken und Ineinanderschieben der sie ausmachenden Teile und Elemente herstellen.

Der Rand 21 der Muffe 2 presst die Dichtung 12 und die beiden Ringscheibenverstärkungen 18, 22 gegen den radialen Abschnitt 33 des Ringdeckels 30. Von diesem radialen Abschnitt 33 erstreckt sich ein umlaufender Steg 95 nach axial innen, der durch den Rand 21 der Muffe in die Rinne 55 der ersten Ringscheibenverstärkung gepresst wird. Um eine dauerhafte Verbindung zwischen Muffe 2 und Ringdeckel 30 zu schaffen, wobei die beiden Ringscheibenverstärkungen 18, 22 und die Dichtung 12 dazwischen verpresst sind, wird die Muffe 2 in den Ringdeckel eingeklebt. Natürlich ist es auch möglich, diese Verbindung durch Verschrauben oder ähnliches zu bewerkstelligen.

Die in der Figur 2c gezeigt Adapter-Kupplung ist ferner mit Klettbandaufnahme 96 versehen, die in einer Bohrung 97 im Flansch 43 des Aufdehnungsringes 40 befestigt werden kann. Zudem ist dort auch eine Verschlusskappe 98 dargestellt.

In der Figur 14 ist eine bereits oben erwähnte weitere Ausführungsform gezeigt, bei der eine erfindungsgemäße Adapter-Kupplung mit einer Filtereinheit kombiniert ist. Die Muffe 2 der Adapter-Kupplung geht in ein Gehäuse 91 für eine Filterpatrone über. Der Wasserauslass 9 befindet sich seitlich an dem Gehäuse 91.

Das Gehäuse 91 stellt einen Zylinderbecher dar, an dessen Seitenwand die Muffe 2 angeformt ist.

Die Becheröffnung wird durch einen aufschraubbaren Deckel 92 verschlossen, in dem die der Wasserauslass 9 drehbar angeordnet ist. Diese Ausstattung einer Filtereinheit mit einer Adapter-Kupplung ist bereits in der vorher genannten PCT/EP/003938 ausführlich beschrieben. Auf die dortige Offenbarung wird hiermit Bezug genommen.

Die in der Figur 14 gezeigten Kombination aus Adapter-Kupplung und Filtereinheit ist kompakt gebaut und kann beispielsweise auf Reisen bequem mitgenommen werden, um das Leitungswasser in den bereisten Ländern zu filtern. Die Filterpatrone kann bekannter Art sein, die beispielsweise mit Aktivkohle bestückt ist.

**Bezugszeichenliste**

| | |
|---|---|
| 1 | Adapter-Kupplung |
| 2 | Muffe |
| 3 | Achse |
| 4 | wasserabgebendes Ende |
| 5 | Wasserauslauf |
| 6 | Muffenöffnung |
| 7 | Muffeninnenraum |
| 8 | Sicherungsbügel |
| 9 | Wasserauslass |
| 10 | Freiraum zwischen den Zungen 20 |
| 11 | Freiraum zwischen den Zungen 24 |
| 12 | elastische Dichtung |
| 13 | zentrale Öffnung der Dichtung |
| 14 | Stützeinheit |
| 15 | Außengewinde des Auslaufstutzens |
| 16 | Auslaufstutzen |
| 17 | Gipfel der Zunge 20 |
| 18 | erste Ringscheibenverstärkung |
| 19 | umlaufender Ringbereich der ersten Ringscheibenverstärkung |
| 20 | Zunge |
| 21 | Rand der Muffe |
| 22 | zweite Ringscheibenverstärkung |
| 23 | umlaufender Ringbereich der zweiten Ringscheibenverstärkung |
| 24 | Zunge |
| 25 | Basis der Zunge der ersten Ringscheibenverstärkung |
| 26 | Dichtring der Dichtung |
| 27 | Basis der Zunge der zweiten Ringscheibenverstärkung |
| 28 | Ausnehmung in der ersten Rinqscheibenverstärkunq |
| 29 | Ausnehmung in der zweiten Ringscheibenverstärkung |
| 30 | Ringdeckel |
| 31 | obere Wand der Zunge 20 |
| 32 | axialer Abschnitt |
| 33 | radialer Abschnitt |
| 34 | zylindrischer Fortsatz |
| 35 | Gewindegang |
| 36 | radial inneres Ende der Zunge 20 |
| 37 | radial inneres Ende der Zunge 24 |
| 38 | Ausbuchtung |
| 39 | Öffnung |
| 40 | Aufdehnungsring |
| 41 | zylindrischer Abschnitt des Aufdehnungsringes |
| 42 | Außengewinde des Aufdehnunqsringes |
| 43 | Flansch des Aufdehnungsringes |
| 44 | ringförmiges Stützelement |
| 45 | glockenförmiger Einsatz |
| 46 | Gipfel der Zungen 24 |
| 47 | Seitenflügel |
| 48 | Verbindungsbereich der Zunge 20 |
| 49 | Seitenflügel |
| 50 | streifenförmiger Fortsatz |
| 51 | Seitenwand der Zungen 20 |
| 52 | Aussparung der Zungen 20 |
| 53 | Gipfel der Zunge 24 |
| 54 | V-förmigen Einschubbereich |
| 55 | Rinne der ersten Ringscheibenverstärkung |
| 56 | satteldachförmiges Stützteil |
| 57 | Öffnung |
| 58 | Linie |
| 59 | Öffnung des |
| 60 | Verbindungsbereich |
| 61 | Aussparung der Zunge 24 |
| 62 | vordere Wand der Zungen 20 |
| 63 | vordere Wand der Zungen 24 |
| 64 | Tasche |
| 65 | Tellerboden |
| 66 | Ringbereich der Dichtung 12 |
| 67 | Sutzen |
| 68 | Flansch |
| 69 | Absatz |
| 70 | obere Wand der Zungen 24 |
| 71 | Cachbereich |
| 72 | Rippe |
| 73 | Rinne |
| 74 | Perlator |
| 75 | oberer Innenrand |
| 76 | Steg |
| 77 | Absatz des Steges 76 |
| 78 | Seitenwand der Zunge 24 |
| 79 | Durchlass |
| 80 | Rinne der zweiten Ringscheibenverstärkung |
| 81 | Öffnung der Tasche 64 |
| 82 | äußerer Ringbereich der Dichtung 12 |
| 83 | Absatz |
| 84 | Absatz unterer Innenrand |
| 85 | Zwischenraum |
| 86 | Bohrung |
| 87 | Ring |
| 88 | Endabschnitt |
| 89 | Ventileinsatz |
| 90 | Ausbuchtung |
| 91 | Gehäuse |
| 92 | Deckel |
| 93 | scheibenförmige Basis |
| 94 | Rand |
| 95 | Steg |
| 96 | Klettbandaufnahme |
| 97 | Bohrung |
| 98 | Verschlussstopfen |
| 99 | Öffnung |
| 100 | flaches plattenförmiges Element |
| 101 | keilförmiges Element |
| 102 | Winkel |
| 103 | Kanal |
| 104 | Stutzen |
| 105 | Kanalabschnitt |
| 106 | Nut |

## Patentansprüche

1. Adapterkupplung zum lösbaren Aufschieben auf das wasserabgebende Ende (4) eines Wasserauslaufes (5), insbesondere eines Wasserhahnes, unter Herstellung einer wasserdichten Verbindung mit einer in etwa haubenförmigen oder glockenförmigen Muffe (2), die in ihrem Muffeninnenraum (7) das wasserabgebende Ende (4) aufnehmen kann und mit einem Wasserauslass (9) versehen ist,
mit einer eine zentrale Öffnung (13) aufweisenden elastischen Dichtung (12), durch deren zentrale Öffnung (13) das wasserabgebende Ende (4) des Wasserauslaufes (5) in den Muffeninnenraum (7) eingeführt werden kann, die durch das eingeführte Ende (4) des Wasserauslaufes (5) aufgeweitet werden und sich an die Außenmantelflache des wasserabgebendes Endes (4) dichtend anlegen kann, die den Muffeninnenraum (7) nach außen fluiddicht abdichtet und die auf der axial außen gelegenen Seite mehrere nach radial innen offene Taschen (64) besitzt,
und mit einer Stützeinheit (14),
die einen aufweitbaren Trichter bildet, die axial außen von der Dichtung (12) angeordnet ist sowie diese Dichtung (12) stützt und
die eine erste, axial äußere Ringscheibenverstärkung (18) und eine zweite, axial innere Ringscheibenverstärkung (22) aufweist, welche jeweils einen äußeren, umlaufenden und durchgehenden Ringbereich (19, 23) besitzen, von dem sich mehrere, gleichmäßig auf dem Umfang verteilte, an ihrer Basis (25, 27) an dem Ringbereich (19, 23) beweglich angelenkte, voneinander beabstandete Zungen (20, 24) nach radial innen sowie schräg zur Längsachse (3) erstrecken,
wobei die Zungen (20) der ersten Ringscheibenverstärkung (18) und auch die Zungen (24) der zweiten Ringscheibenverstärkung (22) zwischen sich einen Freiraum (10 bzw. 11) definieren und die Zungen (24) der zweiten Ringscheibenverstärkung (22) in etwa in den Freiräumen (10) der ersten Ringscheibenverstärkung (18) zu liegen kommen, während die Zungen (20) der ersten Ringscheibenverstärkung (18) in etwa in den Freiräumen (11) der zweiten Ringscheibenverstärkung (22) zu liegen kommen,
**dadurch gekennzeichnet,**
**dass** mehrere der Zungen (20) der ersten Ringscheibenverstärkung (18) in der Nähe ihres radial inneren Endes einen sich nach axial innen erstreckenden Fortsatz (50) besitzen und
die Fortsätze (50) durch die zweite Ringscheibenverstärkung (22) hindurchragen und in eine der Taschen (64) der Dichtung (12) eingreifen.

2. Adapterkupplung nach Anspruch 1,
**dadurch gekennzeichnet,**
der Fortsatz (50) streifenartig ausgebildet ist und/oder sich in etwa in Axialrichtung erstreckt.

3. Adapterkupplung nach Anspruch 1 oder 2,
**dadurch gekennzeichnet,**
**dass** alle Zungen (20) einen Fortsatz (50) besitzen, die Taschen (64) der Dichtung (12) gleichmäßig auf dem Umfang verteilt sind und die Zahl der Taschen (64) der Zahl der Fortsätze (50) entspricht.

4. Adapterkupplung nach einem der vorhergehenden Ansprüche,
**dadurch gekennzeichnet,**
**dass** sich die Zungen (20, 24) in axialer Aufsicht nach radial innen konisch verjüngen.

5. Adapterkupplung nach einem der vorhergehenden Ansprüche,
**dadurch gekennzeichnet,**
**dass** die Anzahl der Zungen (24) der zweiten Ringscheibenverstärkung (22) der Anzahl der Zungen (20) der ersten Ringscheibenverstärkung (18) entspricht.

6. Adapterkupplung nach einem der vorhergehenden Ansprüche,
**dadurch gekennzeichnet,**
**dass** die Zungen (24) der zweiten Ringscheibenverstärkung (22) an ihren beiden sich in etwa radial erstreckenden Seitenrändern jeweils einen Seitenflügel (47, 49) besitzen, die axial innen auf den Zungen (20) der ersten Ringscheibenverstärkung (18) aufliegen.

7. Adapterkupplung nach Anspruch 6,
**dadurch gekennzeichnet,**
die Seitenflügel (47, 49) derart ausgestaltet, dass die aneinander angrenzenden Seitenflügel (47, 49) benachbarter Zungen (24) ein Art Öffnung oder Durchlass (79) definieren.

8. Adapterkupplung nach einem der vorhergehenden Ansprüche,
**dadurch gekennzeichnet,**
**dass** auf die Zungen (24) der zweiten Ringscheibenverstärkung (22) axial innen ein Stützteil (56) aufgesetzt ist, das eine Öffnung (57) besitzt, durch die sich ein Fortsatz (50) hindurch erstreckt.

9. Adapterkupplung nach einem der Ansprüche 1 bis 7,
**dadurch gekennzeichnet,**
**dass** auf die Zungen (24) der zweiten Ringscheibenverstärkung (22) axial innen ein Stützteil (56) aufgesetzt ist, das eine Öffnung (57) besitzt,
**dass** innen im Stützteil (56) ein Kanal (103) ausgebildet ist, der ausgehend von der Öffnung (57) bis zu einem Kanalabschnitt (105) verläuft, der in einem sich im wesentlichen radial erstreckenden Stutzen (104) ausgebildet ist,
**dass** sich der Fortsatz (50) durch die Öffnung (57) des dazugehörigen Stützteils (56) hindurch bis in den Sutzten (104) erstreckt und zusammen mit diesem Stutzen (104) in die dazugehörige Tasche (64) der Dichtung (12) eingreift.

10. Adapterkupplung nach einem der vorhergehenden Ansprüche,
**dadurch gekennzeichnet,**
**dass** im Muffeninnenraum (7) zwei in etwa Ringe darstellende Sicherungsbügel 8 derart angeordnet sind, dass sich die durch die Ringe aufgespannten Ebenen schneiden und einen nach axial innen gerichteten V-förmigen Einschubbereich (54) bilden.

11. Adapterkupplung nach einem der vorhergehenden Ansprüche,
**dadurch gekennzeichnet,**
**dass** die zentrale Öffnung (13) der Dichtung (12) von einem Dichtring (26) eingefasst wird.

12. Adapterkupplung nach einem der vorhergehenden Ansprüche,
**dadurch gekennzeichnet,**
**dass** im Wasserauslass (9) ein ein Rückschlagventil bildender Ventileinsatz (89) angebracht ist.

13. Adapterkupplung nach einem der vorhergehenden Ansprüche,
**dadurch gekennzeichnet,**
**dass** sie mit einer Wasser-Filtereinheit kombiniert ist.

## Claims

1. Adapter coupling for removably sliding onto the water-discharging end (4) of a water outlet (5), in particular a water tap, while establishing a water-tight connection to an approximately dome-shaped or bell-shaped sleeve (2) which can receive the water-discharging end (4) in its inner sleeve space (7) and is provided with a water drain (9),
comprising an elastic seal (12) having a central opening (13) through which the water-discharging end (4) of the water outlet (5) may be introduced into the inner sleeve space (7), and which central opening (13) may be expanded by the introduced end (4) of the water outlet (5) and may rest against the outer lateral surface of the water-discharging end (4) in a sealing manner and seal the inner sleeve space (7) to be fluid-tight to the exterior, and which has a plurality of pockets (64) on the axially exterior side which are open in a radially inward direction,
and comprising a supporting unit (14)
which forms an expandable funnel and is arranged axially external to said seal (12) and supports said seal (12), and
which supporting unit (14) has a first axially outer annular disk reinforcement (18) and a second axially inner annular disk reinforcement (22), each comprising an outer peripheral and continuous annular area (19, 23) from which a plurality of tongues (20, 24) extend radially inward and obliquely to the longitudinal axis (3) and are spaced apart from each other in even distribution on the periphery and moveably articulated to the annular area (19, 23) at their bases (25, 27),
the tongues (20) of the first annular disk reinforcement (18) and also the tongues (24) of the second annular disk reinforcement (22) define a free space (10 or 11) between them, and the tongues (24) of the second annular disk reinforcement (22) are situated essentially in the free spaces (10) of the first annular disk reinforcement (18), whereas the tongues (20) of the first annular disk reinforcement (18) are situated essentially in the free spaces (11) of the second annular disk reinforcement (22),
**characterized in that**
a plurality of the tongues (20) of the first annular disk reinforcement (18) have a protrusion (50) extending radially inwards close to their radially inner end, and
the protrusions (50) protrude through the second annular disk reinforcement (22) and engage into one of the pockets (64) of the seal (12).

2. Adapter coupling according to claim 1,
**characterized in that**
the protrusion (50) is formed to be strip-like and/or extends approximately in an axial direction.

3. Adapter coupling according to claim 1 or claim 2,
**characterized in that**
all of the tongues (20) have a protrusion (50), the pockets (64) of the seal (12) are evenly distributed on the periphery, and the number of pockets (64) corresponds to the number of protrusions (50).

4. Adapter coupling according to any one of the preceding claims,
**characterized in that**
in an axial plan view, the tongues (20, 24) taper radially inwards in conical fashion.

5. Adapter coupling according to any one of the preceding claims,
**characterized in that**
the number of tongues (24) of the second annular disk reinforcement (22) corresponds to the number of tongues (20) of the first annular disk reinforcement (18).

6. Adapter coupling according to any one of the preceding claims,
**characterized in that**
the tongues (24) of the second annular disk reinforcement (22) each comprise, on both of their essentially radially extending lateral edges, a lateral wing (47,49) resting axially inward upon the tongues (20) of the first annular disk reinforcement (18).

7. Adapter coupling according to claim 6.
**characterized in that**
the lateral wings (47 ,49) are configured such that the adjoining lateral wings (47,49) of adjacent tongues (24) define a kind of opening or passage (79).

8. Adapter coupling according to any one of the preceding claims,
**characterized in that**,
onto the tongues (24) of the second annular disk reinforcement (22), a support part (56) is placed axially inward which has an opening (57) through which a protrusion (50) extends.

9. Adapter coupling according to any one of claims 1 to 7,
**characterized in that**,
onto the tongues (24) of the second annular disk reinforcement (22), a support part (56) is placed axially inward which has an opening (57), inside the support part (56), a channel (103) is formed which runs from the opening (57) to a channel portion (105) which is formed into an essentially radially extending nipple (104),
the protrusion (50) extends through the opening (57) of the associated support part (56) to the nipple (104) and engages into the associated pocket (64) of the seal (12) together with said nipple (104).

10. Adapter coupling according to any one of the preceding claims,
**characterized in that**,
inside the inner sleeve space (7), two securing brackets (8) approximately representing rings are disposed such that the planes spanned by the rings intersect and form a V-shaped insertion area (54) oriented axially inwards.

11. Adapter coupling according to any one of the preceding claims,
**characterized in that**
the central opening (13) of the seal (12) is enclosed by a sealing ring (26).

12. Adapter coupling according to any one of the preceding claims,
**characterized in that**
a valve insert (89) forming a check valve is positioned in the water drain (9).

13. Adapter coupling according to any one of the preceding claims,
**characterized in that**
same is combined with a water filter unit.

## Revendications

1. Raccord adaptateur destiné à être placé de façon amovible sur l'extrémité de distribution d'eau (4) d'une sortie d'eau (5), en particulier d'un robinet d'eau, de façon à réaliser une liaison étanche à l'eau avec un manchon (2) ayant sensiblement la forme d'une calotte ou d'une cloche, lequel peut recevoir l'extrémité de distribution d'eau (4) dans son espace intérieur de manchon (7) et est pourvu d'un écoulement d'eau (9),
comprenant une garniture d'étanchéité élastique (12) présentant une ouverture centrale (13) et par l'ouverture centrale (13) de laquelle l'extrémité de distribution d'eau (4) de la sortie d'eau (5) peut être introduite dans l'espace intérieur de manchon (7), qui peut être évasée par l'extrémité (4) introduite de la sortie d'eau (5) et se poser de manière étanche contre la surface d'enveloppe extérieure de l'extrémité de distribution d'eau (4), qui assure l'étanchéité aux fluides de l'espace intérieur de manchon (7) par rapport à l'extérieur et qui comporte, du côté axialement situé à l'extérieur, plusieurs poches (64) ouvertes du côté radialement intérieur,
et comprenant une unité de support (14),
qui forme un entonnoir évasable, qui est disposée du côté axialement extérieur de la garniture d'étanchéité (12) et qui supporte cette garniture d'étanchéité (12), et
qui présente un premier élément de renforcement annulaire (18) axialement extérieur et un deuxième élément de renforcement annulaire (22) axialement intérieur, lesquels présentent chacun une zone annulaire (19, 23) extérieure, périphérique et continue à partir de laquelle plusieurs languettes (20, 24) espacées entre elles, articulées à la zone annulaire (19, 23) au niveau de leur base (25, 27) et réparties uniformément sur la circonférence s'étendent radialement vers l'intérieur ainsi qu'obliquement par rapport à l'axe longitudinal (3),
sachant que les languettes (20) du premier élément de renforcement annulaire (18) ainsi que les languettes (24) du deuxième élément de renforcement annulaire (22) définissent entre elles un espace libre (10 et 11 respectivement) et les languettes (24) du deuxième élément de renforcement annulaire (22) viennent sensiblement reposer dans les espaces libres (10) du premier élément de renforcement annulaire (18), tandis que les languettes (20) du premier élément de renforcement annulaire (18) viennent sensiblement reposer dans les espaces libres (11) du deuxième élément de renforcement annulaire (22),
**caractérisé en ce que**
plusieurs des languettes (20) du premier élément de renforcement annulaire (18) comportent, à proximité de leur extrémité radialement intérieure, un prolongement (50) s'étendant axialement vers l'intérieur et les prolongements (50) dépassant du deuxième élément de renforcement annulaire (22) en le traversant et prennent dans une des poches (64) de la garniture d'étanchéité (12).

2. Raccord adaptateur selon la revendication 1,
**caractérisé en ce que**
le prolongement (50) est constitué sous forme de bande et/ou s'étend sensiblement en direction axiale.

3. Raccord adaptateur selon la revendication 1 ou 2,
**caractérisé en ce que**
toutes les languettes (20) présentent un prolongement (50), les poches (64) de la garniture d'étanchéité (12) sont réparties uniformément sur la circonférence et le nombre de poches (64) correspond au nombre de prolongements (50).

4. Raccord adaptateur selon l'une des revendications précédentes,
**caractérisé en ce que**
les languettes (20, 24) s'amincissent, en vue axiale, coniquement vers l'intérieur en sens radial.

5. Raccord adaptateur selon l'une des revendications précédentes,
**caractérisé en ce que**
le nombre de languettes (24) du deuxième élément de renforcement annulaire (22) correspond au nombre de languettes (20) du premier élément de renforcement annulaire (18).

6. Raccord adaptateur selon l'une des revendications précédentes,
**caractérisé en ce que**
les languettes (24) du deuxième élément de renforcement annulaire (22) comportent, sur chacun de leurs deux bords latéraux s'étendant de manière sensiblement radiale, une aile latérale (47, 49) qui repose sur les languettes (20) du premier élément de renforcement annulaire (18) du côté axialement intérieur.

7. Raccord adaptateur selon la revendication 6,
**caractérisé en ce que**
les ailes latérales (47, 49) sont configurées de telle manière que les ailes latérales (47, 49) adjacentes de languettes (24) voisines définissent une sorte d'ouverture ou de passage (79).

8. Raccord adaptateur selon l'une des revendications précédentes,
**caractérisé en ce que**
un élément de support (56) comportant une ouverture (57) au travers de laquelle s'étend un prolongement (50) est posée sur les languettes (24) du deuxième élément de renforcement annulaire (22) du côté axialement intérieur.

9. Raccord adaptateur selon l'une des revendications 1 à 7,
**caractérisé en ce que**
un élément de support (56) comportant une ouverture (57) est posé sur les languettes (24) du deuxième élément de renforcement annulaire (22) du côté axialement intérieur,
**en ce qu'**un conduit (103) qui, partant de l'ouverture (57), va jusqu'à une section de conduit (105) qui est constituée dans une tubulure (104) s'étendant de manière sensiblement radiale est constitué à l'intérieur de l'élément de support (56),
**en ce que** le prolongement (50) s'étend à travers l'ouverture (57) de l'élément de support (56) associé jusque dans la tubulure (104) et prend conjointement avec cette tubulure (104) dans la poche (64) associée de la garniture d'étanchéité (12).

10. Raccord adaptateur selon l'une des revendications précédentes,
**caractérisé en ce que**
deux étriers de sûreté (8) représentant sensiblement des bagues sont disposés dans l'espace intérieur de manchon (7) de telle manière que les plans tendus par les bagues se croisent et forment une zone d'insertion (54) en V dirigée axialement vers l'intérieur.

11. Raccord adaptateur selon l'une des revendications précédentes,
**caractérisé en ce que**
l'ouverture centrale (13) de la garniture d'étanchéité (12) est cerclée par une bague d'étanchéité (26).

12. Raccord adaptateur selon l'une des revendications précédentes,
**caractérisé en ce que**
un insert de vanne (89) formant un clapet anti-retour est disposé dans l'écoulement d'eau (9).

13. Raccord adaptateur selon l'une des revendications précédentes,
**caractérisé en ce que**
il est combiné à une unité de filtration d'eau.
